# EUROPEAN PATENT SPECIFICATION

(11) **EP 2 391 098 B1**
(45) Date of publication and mention of the grant of the patent: **25.07.2012**
(21) Application number: 11165614.6
(22) Date of filing: 11.05.2011
(51) Int. Cl.: H04M 1/22, G02B 6/00, H01H 13/02, H01H 13/702, G06F 3/02

(54) **Input device for a mobile terminal**
Eingabevorrichtung für ein mobiles Endgerät
Dispositif d'entrée pour terminal mobile

(30) Priority: 31.05.2010 KR 20100050879
(43) Date of publication of application: 30.11.2011
(73) Proprietor: LG ELECTRONICS INC., Yeongdeungpo-gu Seoul 150-721 (KR)
(72) Inventor: Park, Heenam, 153-801 Seoul (KR)
(74) Representative: Cabinet Plasseraud

(56) References cited:
- EP-A1- 1 724 800
- EP-A1- 2 056 317
- WO-A1-2009/157218
- WO-A1-2010/026856
- JP-A- 2004 069 751
- US-A1- 2007 039 809

## Description

### FIELD OF THE INVENTION

The present disclosure relates to an input device for a mobile terminal that increases a luminance of a keypad without increasing a thickness of a terminal body.

### BACKGROUND OF THE INVENTION

Input devices for mobile terminals that provide illumination of a keypad are known. However, they suffer from various disadvantages.

Document EP-A-1 724 800 describes a keypad including a light guide panel, at least one key button positioned on the upper surface of the light guide panel and at least one reflective pattern fixedly positioned with respect to the light guide panel to reflect a part of the light which propagates through the interior of the light guide panel, towards the key button.

Document WO-A-2009/157218 describes a key module of a portable apparatus comprising a key top being depressed by an operator, a substrate on which a contact is arranged, a dome arranged over the key top-side contact, a dome sheet covering the dome, an LED module arranged on the substrate, a light guide plate arranged on the key top-side dome sheet in order to make incident light from the LED module propagate there through and exit from an exit surface on the key top side. The light guide plate is formed by printing a dot pattern of white ink on the surface opposite to the exit surface of a base material consisting of a thermosetting polyurethane elastomer sheet by ink jet.

Document US-A-2007/0039809 describes a sheet switch module including a sheet switch having a central contact disposed on a circuit board, a circumferential contact disposed circumferentially of the central contact, a spring disposed above the central contact, and a transparent sheet member configured to cover the spring, the sheet switch forming a switching circuit such that the spring provides electrical conduction between the central contact and the circumferential contact when the sheet member is pressed, the sheet member being formed by a light guiding sheet configured to guide light emitted from an LED along an upper surface of the spring. Document JP-A-2004 069751 describes a light guide sheet capable of efficiently guiding light from a light source for back light without leaking it from the side surface side and mounted on the key switch of a cellular phone or a personal digital assistant or the like made thinner. The light guide sheet comprises a light receiving part into which the light emitted by an LED is guided. The light receiving part is equipped with a light receiving surface formed to have nearly the same thickness as the light emitting surface of the LED, and a tapered light guiding part inclined from the light receiving surface toward the main body part, whereby the light emitted by the LED is efficiently guided into the sheet and irradiates the entire sheet brightly.

Document WO-A-2010/026856 describes a light guiding sheet provided on the backside of a keytop comprising a plurality of key buttons to guide light emitted from a light source for illuminating the plurality of key buttons from the backside of the keytop. The light guiding sheet comprises a flat plate-shaped light guiding part and a peripheral part that is provided integrally with the periphery of the light guiding part. The peripheral part has a larger thickness than the thickness of the light guiding part, and the surface of the peripheral part which faces the backside of the keytop is flat. The side surface of the peripheral part serves as an incident plane for light emitted from the light source.

Document EP-A-2 056 317 describes rows of key-caps including respective light-strips, which pick up light from respective LEDs surface-mounted on the PCB. The light-strips are sandwiched between the key-caps and keyswitch actuators. Sockets for receiving the key-caps are co-molded to the light-strips. Sockets are provided in the resilient webs of the keys for receiving under-blocks co-molded to the light-strips.

### SUMMARY OF THE INVENTION

An object of the present invention is to substantially obviate one or more problems due to limitations and disadvantages of the related art. To achieve this object and other advantages, and in accordance with the purpose of the invention, as embodied and broadly described herein, an input device for a mobile terminal comprises the features of claim 1.

Further embodiments of the input device for a mobile terminal according to the present invention are described in the dependent claims.

### BRIEF DESCRIPTION OF THE DRAWINGS

The embodiments will be described in detail with reference to the following drawings in which like reference numerals refer to like elements wherein:

FIG. 1 is a block diagram of a mobile terminal in accordance with an embodiment;

FIG. 2 is a front perspective view of a mobile terminal according to one embodiment;

FIG. 3 is a rear perspective view of a mobile terminal according to one embodiment;

FIG. 4 is an exploded perspective view of a user input unit of a mobile terminal according to one embodiment;

FIG. 5 is an exploded perspective view of the user input unit shown in FIG. 4 to show a bottom view;

FIG. 6 illustrates a layout of a light guide film provided in a mobile terminal;

FIG. 7 is a cross-sectional view of a user input unit of a mobile terminal according to one embodiment;

FIGs. 8A and 8B are enlarged cross-sectional views of the user input unit of FIG. 7;

FIGs. 9A and 9B are cross-sectional views of a light collecting member according to an embodiment;

FIG. 10 is a cross-sectional view of a light guide film according to another embodiment;

FIGs. 11A and 11B are enlarged cross-sectional views of another part of the user input unit of FIG. 7; and

FIG. 12 shows a variation of density of patterns formed in the respective regions of a light guide film according to one embodiment.

### DETAILED DESCRIPTION

As used herein, the suffixes 'module', 'unit' and 'part' are used for elements in order to facilitate the disclosure only. Therefore, significant meanings or roles are not given to the suffixes themselves and it is understood that the 'module', 'device', 'unit' and 'part' can be used together or interchangeably.

Generally, terminals can be classified into mobile terminals and stationary terminals according to a presence or non-presence of mobility. And, the mobile terminals can be further classified into handheld terminals and vehicle mount terminals according to a desired application and degree of mobility.

As functions of the terminal are diversified, the terminal may be implemented as a multimedia player type equipped with composite functions including picture or video photographing, music or video file playback, games, broadcast reception, and the like. The mobile terminal may integrate a plurality of functions of various independent multimedia devices.

Generally, a mobile terminal having a communication function can be classified into a bar type (e.g., a full touch screen type, etc.), a folder type, a slide type, and the like. The above-configured mobile terminal can include at least one keypad or the like as a user input interface to enable a user to control the mobile terminal. The keypad may include a plurality of manipulating buttons. If a prescribed one of the manipulating buttons is pressed, a dome switch positioned beneath the prescribed manipulating button may come into contact with an electrode to generate an electric control signal.

The mobile terminals may include a display provided on a front side that includes a touchpad to detect a touch input so that the display can be used as a user input device. In particular, the keypad and the display can be built in one body.

Meanwhile, the above-configured keypad is frequently provided with an illumination function. For instance, in order to manipulate a mobile terminal using a keypad in low light areas, light can be applied under the keypad. However, if an independent light source is provided under each region resulting from partitioning the keypad to represent one of a numeral, character, and the like, and light is applied toward the keypad to implement the illumination function, it may be accompanied by a highly increasing cost. Therefore, the illumination function may be provided in a manner of loading a smaller number of light sources to share the light provided by the light sources.

Thus, in order to share the illumination by loading the small number of light sources, a light guide film may be provided. The light guide film is a sheet type film made of a transparent material. Light incident on a lateral surface of the light guide film may be reflected into the light guide film to be supplied to a bottom side of the keypad. Generally, the light guide film may be provided under the keypad.

Since the light source projects light to a lateral side surface of the light guide film, the light guide film may be formed thick to improve illumination of the keypad (i.e., to enhance luminance). However, if the thickness of the light guide film increases, the thickness of the terminal body may increase as well to make it difficult to downsize the terminal. If the keypad is a mechanical type provided with a manipulating button and a dome switch, the increasing thickness of the light guide film positioned between the manipulating button and the dome switch may degrade the feel of the button.

Meanwhile, in order to increase the amount of light incident on the light guide film to a specific portion of the keypad, e.g., a numeral or character printed part, a specific pattern can be formed on a backside of the light guide film. Therefore, the demand for shortening a process time taken to form the specific pattern and/or reducing a process cost is rising.

The present description can be applicable to a various types of terminals. Examples of such terminals include mobile as well as stationary terminals, such as mobile phones, user equipment, smart phones, DTV, computers, digital broadcast terminals, personal digital assistants, portable multimedia players (PMP) and navigators, or another appropriate device based on the desired function. Simply for ease of discussion, the terminal is disclosed herein as being a mobile terminal 100. However, it should be appreciated that the disclosure may apply equally to other types of terminals.

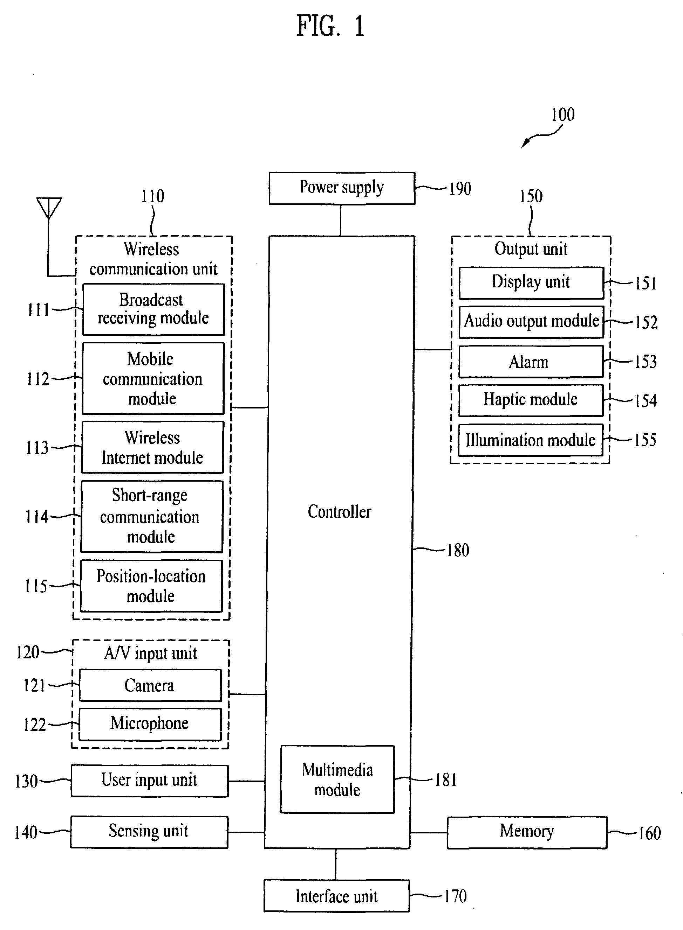

FIG. 1 is a block diagram of a mobile terminal 100 in accordance with an embodiment. The mobile terminal 100 may include a wireless communication unit 110, an A/V (audio/video) input unit 120, a user input unit 130, a sensing unit 140, an output unit 150, a memory 160, an interface unit 170, a controller 180, a power supply unit 190 and the like. FIG. 1 shows the mobile terminal 100 having various components, but it is understood that implementing all of the illustrated components is not a requirement. Greater or fewer components may alternatively be implemented.

The wireless communication unit 110 may include one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115 and the like.

The broadcast receiving module 111 may receive a broadcast signal and/or broadcast associated information from an external broadcast managing server via a broadcast channel. The broadcast channel may include a satellite channel and a terrestrial channel.

The broadcast managing server may be a server which generates and transmits a broadcast signal and/or broadcast associated information, or a server which is provided with a previously generated broadcast signal and/or broadcast associated information provided for a terminal.

The broadcast signal may be implemented as a TV broadcast signal, a radio broadcast signal, and a data broadcast signal, or another appropriate type of signal. If desired, the broadcast signal may further include a broadcast signal combined with a TV or radio broadcast signal.

The broadcast associated information may include information associated with a broadcast channel, a broadcast program, a broadcast service provider, etc. Moreover, the broadcast associated information can be provided via a mobile communication network. In this case, the broadcast associated information can be received by the mobile communication module 112. The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. For example, such broadcasting systems may include digital multimedia broadcasting-terrestrial (DMB-T), digital multimedia broadcasting-satellite (DMB-S), digital video broadcast-handheld (DVB-H), DVB-CBMS, OMA-BCAST, the data broadcasting system known as media forward link only (MediaFLO®), or integrated services digital broadcast-terrestrial (ISDB-T). Optionally, the broadcast receiving module 111 can be configured to be compatible with other broadcasting systems as well as the above-explained digital broadcasting systems. Moreover, the broadcast signal and/or broadcast associated information received by the broadcast receiving module 111 may be stored in a storage device, such as a memory 160.

The mobile communication module 112 may transmit/receive wireless signals to/from one or more network entities (e.g., base station, external terminal, server, etc.). Such wireless signals may represent audio, video, and data according to text/multimedia message transfer, among others.

The wireless internet module 113 may support Internet access for the mobile terminal 100. This module may be internally or externally coupled to the mobile terminal 100. In this case, the wireless Internet technology can include WLAN (Wireless LAN) (Wi-Fi), Wibro (Wireless broadband), Wimax (World Interoperability for Microwave Access), HSDPA (High Speed Downlink Packet Access), or another appropriate technology or protocol.

The short-range communication module 114 may facilitate relatively short-range communications. Suitable technologies for implementing this module include radio frequency identification (RFID), infrared data association (IrDA), ultra-wideband (UWB) as well as networking technologies commonly referred to as Bluetooth and ZigBee, to name a few.

The position-location module 115 may identify or otherwise obtain the location of the mobile terminal 100. If desired, this module may be implemented with a global positioning system (GPS) module.

Meanwhile, the A/V (audio/video) input unit 120 may be configured to input an audio signal or a video signal, and can include a camera module 121, a microphone module 122, or another appropriate input device. The camera module 121 may process an image frame of a still or moving picture obtained by an image sensor in a video call mode or a photographing mode. The processed image frame can be displayed on the display 151.

The image frame processed by the camera module 121 may be stored in the memory 160 or can be externally transmitted via the wireless communication unit 110. One or more camera modules 121 can be provided according to a configuration type of the terminal.

The microphone 122 may receive an external audio signal while the portable device is in a particular mode, such as phone call mode, recording mode or a mode requiring voice recognition. This audio signal may be processed and converted into electric audio data. The processed audio data may be transformed into a format transmittable to a mobile communication base station via the mobile communication module 112, for example, in case of a call mode. The microphone 122 may typically include assorted noise canceling algorithms to remove noise generated in the course of receiving the external audio signal.

The user input module 130 may generate input data responsive to user manipulation of an associated input device or devices. Examples of such devices include a keypad, a dome switch, a touchpad such as a static pressure/capacitance type touchpad, a jog wheel, and a jog switch. The user input module 130 may also be configured as a touchpad integrated on a display.

The sensing unit 140 may detect current configuration or state of the mobile terminal 100 such as an open/closed configuration of the mobile terminal 100, a location of the mobile terminal 100, a presence or absence of user contact, and the like, and may then generate a signal to control an operation of the mobile terminal 100.

For instance, if the mobile terminal 100 is a slide phone type, the sensing unit 140 may be able to sense whether the slide phone is open or closed. The sensing unit 140 may also be configured to sense other states of the mobile terminal 100 such as a presence of power from the power supply 190, a connection state of an external device at the interface unit 170, and the like.

The output unit 150 may be configured to output an audio signal, a video signal, an alarm signal or another appropriate type of signal. The output unit 150 can include the display 151, an audio output module 152, an alarm output module 153, a haptic module 154, an illuminating unit 155, and the like.

The display 151 may be implemented to visually display (output) information associated with the mobile terminal 100. For instance, if the mobile terminal is operating in a phone call mode, the display may provide a user interface (UI) or graphical user interface (GUI) which includes information associated with placing, conducting, or terminating a phone call.

The display 151 may be implemented using known display technologies including, for example, a liquid crystal display (LCD), a thin film transistor-liquid crystal display (TFT-LCD), an organic light-emitting diode display (OLED), a flexible display, a three-dimensional display or another appropriate type of display. Moreover, the mobile terminal 100 may include one or more of such displays. For instance, an external display and an internal display can be simultaneously provided on the mobile terminal 100.

The audio output module 152 may function in various modes including a call-receiving mode, a call-placing mode, a recording mode, a voice recognition mode, a broadcast reception mode, and the like, to output audio data which may be received from the wireless communication unit 110 or stored in the memory 160. During operation, the audio output module 152 may output audio relating to a particular function (e.g., call received, message received, etc.). The audio output module 152 may be implemented using one or more speakers, buzzers, another type of audio producing device, and various combinations thereof.

The alarm 153 may output a signal to notify an occurrence of a particular event associated with the mobile terminal 100. Typical events may include a call received event, a message received event, or a touch input received event. The alarm 153 may be able to output a signal to announce the event occurrence by way of vibration as well as video or audio signal. The video or audio signal can be outputted via the display 151 or the audio output module 152. Hence, the display 151 or the audio output module 152 can be regarded as a component of the alarm 153.

The haptic module 154 may generate various tactile effects that can be sensed by a user. Vibration is a representative one of the tactile effects generated by the haptic module 154. Strength and pattern of the vibration generated by the haptic module 154 are controllable. For instance, different vibrations can be outputted in a manner of being synthesized together or can be outputted in sequence.

The haptic module 154 is able to generate various tactile effects as well as the vibration. For instance, the haptic module 154 may generate the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device, and the like.

The haptic module 154 can be implemented to enable a user to sense the tactile effect through a muscle sense of finger, arm, or the like, as well as to transfer the tactile effect through a direct contact. Optionally, a plurality of haptic modules 154 can be provided on the mobile terminal 100 in accordance with the corresponding configuration type of the mobile terminal 100.

The illuminating module 155 can be provided for various kinds of illumination effects of the mobile terminal. For instance, a mobile terminal recently tends to provide an illumination function to a user input unit and the like. For this, the illuminating unit 155 can be provided in addition to a backlight of the display unit 151. In this case, the illuminating unit 155 can include LED (light emitting diodes) and the like, which will be described later.

The mobile terminal 100 according to the present disclosure may include at least one light source configured to provide illumination to the user input unit 130. A light guide film may be provided to direct light applied by the at least one light source toward the user input unit 130. The light guide may improve distribution of the light from the light source on the user input device 130.

The memory 160 can store programs that controls the controller 180 and may also temporarily store inputted/outputted data (e.g., phonebook data, message data, still picture data, moving picture data, etc.). Moreover, the memory 160 can store data related to various patterns of vibration and sounds which may be outputted in response to a touch input at the touchscreen.

The memory 160 can include at least one storage medium of a various type, for example, a flash memory type, a hard disk type, a multimedia card micro type, a card type memory (e.g., SD memory, XD memory, etc.), RAM and ROM, or another appropriate type of a storage device. Moreover, the memory 160 may be a web storage device that performs a network storage function over a network, e.g., the Internet.

The interface unit 170 may allow connection of one or more external devices to the mobile terminal 100. The interface unit 170 may include an I/O port that external devices. For instance, the external devices may include a wire/wireless headset, an external electricity charger, a wire/wireless data port, a card socket (e.g., memory card socket, SIM/UIM card socket, etc.), audio l/0 (input/output) terminals, video I/O (input/output) terminals, earphones, etc. The interface unit 170 may receive data from the external device. The interface unit 170 may also receive power from an external device supplied with power. The interface unit 170 may deliver the received data or the supplied power to the corresponding component within the mobile terminal 100 or may transmit data from the portable terminal 100 to the corresponding external device.

The controller 180 normally controls overall operations of the mobile terminal 100. For instance, the controller 180 performs the control and processing related to a voice call, data communication, video call, and the like. Moreover, the controller 180 can be provided with a multimedia module 181 for multimedia playback. The multimedia playback module 180 can be configured as hardware within the controller 180 or software separate from the controller 180.

The power supply 190 may receive power from an external and/or internal power source for operations of the respective components, under the control of the controller 180.

Simply for ease of description, a mobile terminal is described hereinbelow having a slider type configuration selected from a folder type, a bar type, a swing type, a slide type, and the like. However, the present disclosure is not limited to a particular configuration, and may be applicable to mobile terminals of various types including the above-mentioned types.

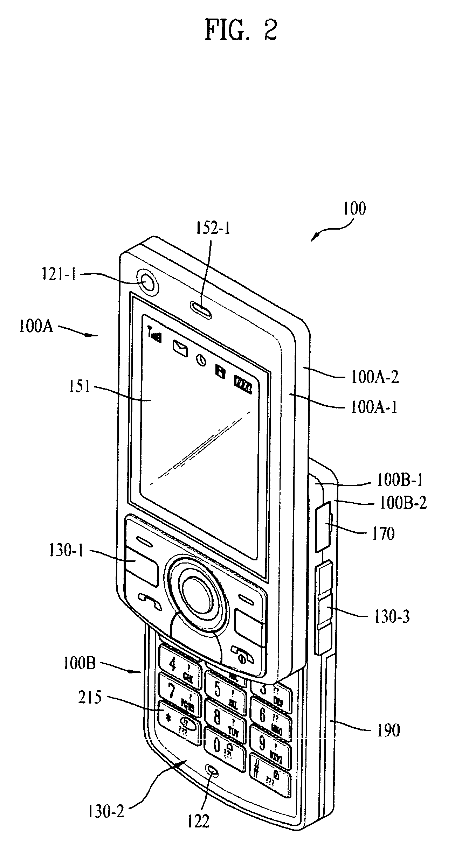

FIG. 2 is a perspective view of a mobile terminal according to one embodiment. The mobile terminal 100 may include a first body 100A and a second body 100B configured to slide on the first body 100A along at least one direction.

If the first body 100A is arranged in a manner of being superposed on the second body 100B, it can be referred to as being in a closed configuration. If the first body 100A is configured to be exposed at at least one portion of the second body 100B, it can be referred to as being in an open configuration.

In the closed configuration, the mobile terminal may be operable in a standby mode. The standby mode can be released by user's manipulation. In the open configuration, the mobile terminal may be operable in a call mode or the like. According to user's manipulation or expiration of a prescribed time period, a mode of the mobile terminal 100 can be switched to the standby mode.

A case forming an exterior of the first body 100A may include a first front case 100A-1 and a first rear case 100A-2. Various electric and electronic parts may be positioned in a space formed between the first front case 100A-1 and the first rear case 100A-2. Moreover, one or more middle cases can be additionally provided between the first front case 100A-1 and the first rear case 100A-2. The cases can be formed by injection molding using a synthetic resin. Alternatively, the cases can be formed of metal material such as stainless steel (STS), titanium (Ti) and the like.

A display module 151, a first audio output module 152-1, a first camera module 121-1 and a first user input unit 130-1 can be provided on the first body 100A, and more particularly, to the first front case 100A-1.

The display module 151 may include at least one device to display information. In this case, the display module 151 may include a liquid crystal display (LCD), an organic light emitting diode (OLED) display and/or the like. A touchpad may be superposed on the display module 151 and configured in a layered structure. Therefore, the display module 151 can operate as a touchscreen to enable information to be inputted by a touch input.

The first audio output module 152-1 can be implemented as a speaker. The first camera module 121-1 can be provided for photographing an image or video and the like. The first user input unit 130-1 may receive an input of a command to control an operation of the mobile terminal 100.

Like the first body 100A, a case forming an exterior of the second body 100B may include a second front case 100B-1 and a second rear case 100B-2. A second user input unit 130-2 can be provided on the second body 100B, and more particularly, to a front face of the second front case 100B-1.

A third user input unit 130-3, a microphone module 122 and an interface unit 170 can be provided on at least one of the second front case 100B-1 and the second rear case 100B-2.

The first to third user input units 130-1, 130-2 and 130-3 can be generally called a user input unit (manipulating portion) 130. The manipulating portion can adopt any tactile manner that enables a user to perform manipulation with tactile feeling.

The first user input unit 130-1 may be configured for inputting various commands such as start, end, scroll and the like. The second user input unit 1302-2 may be configured to input numerals, characters, symbols and the like.

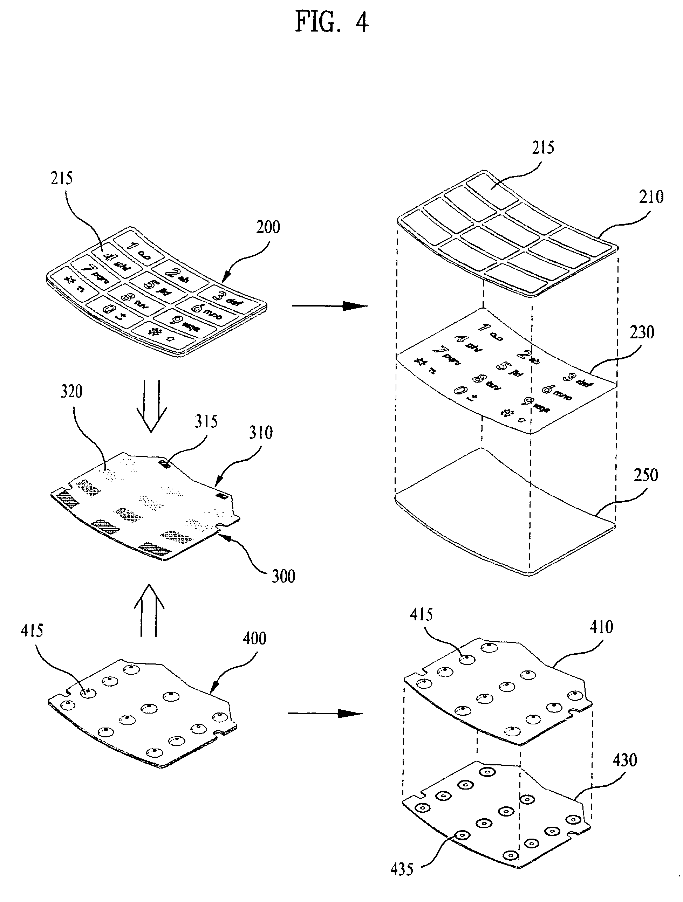

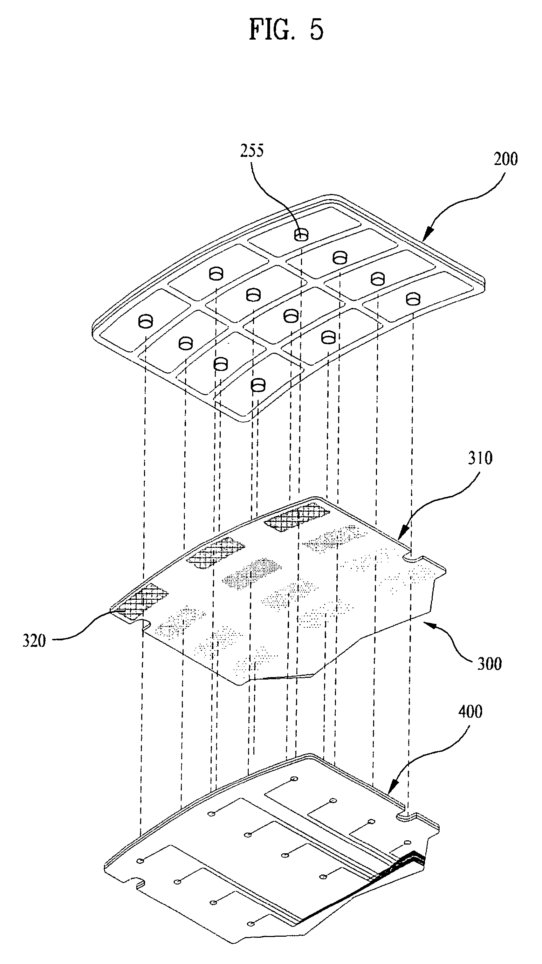

The second user input unit 130-2 can include a keypad 200 having buttons 215 (keys) configured to be externally exposed. As described in further detail hereinafter with reference to FIGs. 4 and 5, the keypad 200 may include a printed circuit board 400 having a dome switch 415 provided under the keypad 200 and an electrode part 435 selectively brought into contact with the dome switch 415. A detailed configuration of the second user input unit 130-2 is described in further detail hereinafter.

In case that the second user input unit 130-2 is configured to input numerals, characters, symbols and the like using the keypad 200 and the like, the keypad 200 can be provided with a plurality of manipulating buttons 215 configured to be pressed by a user. As shown in FIG. 2, a total 12 manipulating buttons 215 may be provided on the keypad 200.

However, the keypad 200 of the mobile terminal 100 according to the present disclosure is not limited to a push button type. Alternatively, the keypad 200 may be implemented with a touch panel to receive an input of a user command electro-statically.

Each of the manipulating buttons 215 may be integrated on one body and attached to the keypad 200 or can be attached to the keypad 200 separately. If a user presses one of the manipulating buttons 215, a corresponding dome switch may be brought into contact with the electrode to generate an electrical control signal.

A numeral, a character, a symbol, and/or the like, may be marked on each of the manipulating buttons 215. The numeral, character, or symbol marked on the corresponding manipulating button 215 may be configured to be translucent (light-transmittive) to transmit light therethrough.

The light-transmittive configuration of the manipulating button 215 illuminate the manipulating button 215 to facilitate its use by improving visibility as well as providing feedback to a user. Moreover, the light-transmittive configuration of the manipulating button 215 may enhance an appearance of the exterior as well. Therefore, the numeral, character, symbol, or the like, provided on the manipulating button 215 can be configured to enable the numeral, character, symbol, or the like, to be brightly illuminated by the illumination applied underneath.

The third user input unit 130-3 can work as a hot-key for activating a special function within the mobile terminal 100. The microphone module 122 can be implemented into a form suitable for receiving an input of user's speech and other sounds. The interface unit 170 may be a data port or socket to allow the mobile terminal to data exchange with an external device, and the like. For instance, the interface unit 170 can include at least one of a connection terminal for connection to an earphone by wire or wireless, a port for short range communication (e.g., IrDA port, Bluetooth port, wireless LAN port, etc.), or a power supply terminal for supplying power to the mobile terminal. The interface unit 170 can include a card socket for accommodating an external card such as a SIM (subscriber identity module), a UIM (user identity module), a memory card for information storage, or the like.

Moreover, the power supply unit 190 may be provided on the second rear case 100B-2 to connect to a power supply. In this case, the power supply unit 190 can be detachably provided as a rechargeable battery on the second rear case 100B-2.

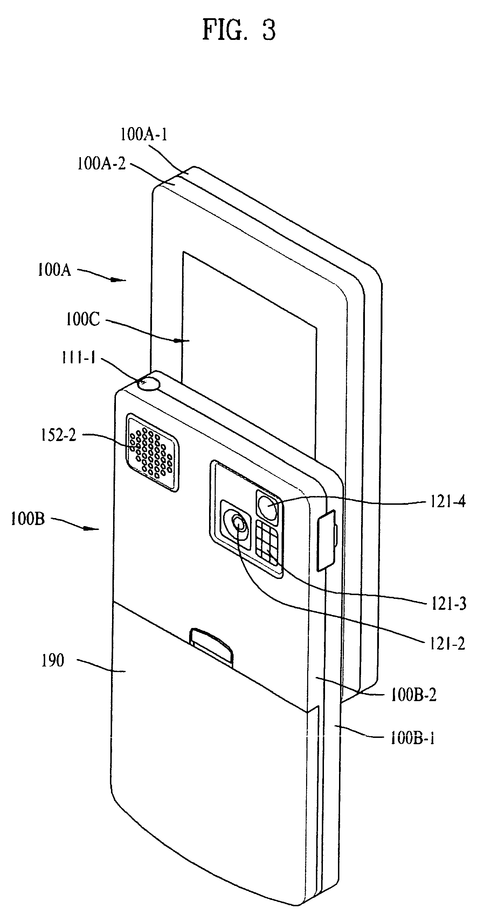

FIG. 3 is a perspective of a mobile terminal according to one embodiment that shows a configuration of the rear side of the mobile terminal 100. A second camera module 121-2 can be additionally provided on a rear side of the second rear case 100B-2. The second camera module 121-2 may be configured to capture images in a direction substantially opposite to that of the first camera module 121-1 of FIG. 1, and can be configured to capture images having a different pixel count from those of the first camera module 121-1 of FIG. 1.

For instance, the first camera module 121-1 may have a relatively low number of pixels sufficient for capturing an image (still or video) of a user for transmission to a counterpart in the course of a video call or the like. On the contrary, the second camera module 121-2 may be used to take a picture of a subject but generally may not transmit the captured picture. Therefore, the second camera module 121-1 may be configured to have a relatively higher number of pixels.

In the vicinity of the second camera module 121-2, a flash 121-3 and a mirror 121-4 can be additionally arranged. In case of taking a picture of a subject using the second camera module 121-2, the flash 121-3 project light toward the subject. If a user attempts to take a picture of herself/himself using the second camera module 121-2 (i.e., self-photographing), the mirror 121-4 may allow the user's face to be reflected thereon.

A second audio output module 152-2 can be additionally provided on the second rear case 100B-2. The second audio output module 152-2 can implement a stereo function together with the first audio output module 152-1 of FIG. 2 and may be used during a call in speakerphone mode.

A broadcast signal receiving antenna 111-1 can be provided on one side of the second rear case 100B-2 as well as an antenna for communication and the like. In this case, the broadcast signal receiving antenna 111-1 can be configured to be retractable from the second body 100B. Of course, the antenna 111-1 can be positioned on the first body 100A.

A slide module 100C may be provided to enable the first and second bodies 100A and 100B to be slidably assembled together. One portion of the slide module 100C can be provided adjacent to the rear case 100A-2 of the first body 100A. The other portion of the slide module 100C may be provided adjacent to the front case 100B-1 of the second body 100B such that the slide module 100C is not externally exposed when the mobile terminal 100 is opened.

Simply for ease of description, various components such as the second camera module 121-2 have been disclosed as being provided on the second body 100B, however, the present disclosure is not limited thereto. For instance, at least one of the components 111-1, 121-2, 121-3, 121-4 or 152-2 disclosed as being provided on the second rear case 100B-2 may be provided on the first body 100A, and more particularly, to the first rear case 100A-2. In such a configuration, the component(s) provided on the first rear case 100A-2 may be protected by the second body 100B when the mobile terminal 100 is in the closed configuration. Moreover, even if the second camera module 121-2 is not separately provided, the first camera module 121-1 may be configured to rotate so as to also capture images toward the rear of the module terminal 100.

FIG. 4 is an exploded perspective view of a user input device of a mobile terminal according to one embodiment. The user input device of the mobile terminal 100 may be a keypad assembly and may include at least one light source, a keypad 200 having a plurality of manipulating buttons 215, a light guide 300 (e.g., waveguide or light guide film) configured to internally guide light incident on its lateral surface, and a printed circuit board 400 having a dome switch array 410 and a substrate 430. A plurality of dome switches 415 provided on the dome switch array 410 may be configured to be depressed by a corresponding button 215 such that it comes in contact with a corresponding electrode 435. An incident light intensity extending part 310 (extended light receiving surface), configured to extend a light incident area, can be provided on a portion of the light guide film 300 at which the light provided by the light source is incident.

The incident light intensity extending part 310 may include a light collecting member 315 (light collector) provided on a top surface of the light guide film 300 to have a prescribed height. The light collecting member 315 may be an extension or protrusion formed on the light guide film 300. The light incident on the lateral side of the light collecting member 315 can be reflected toward the light guide film 300.

Moreover, at least one pattern part 320 (reflecting surface) can be formed on the light guide film 300. In this case, the at least one pattern part 320 may be configured to have one of a plurality of patterns. The pattern part 320 formed on the light guide film 300 is described in further detail hereinafter.

Alternatively, as mentioned in the foregoing description, the mobile terminal according to the present description may be configured to receive an input electro-statically by implementing a touch panel, or the like, on the keypad 200 instead of the above-described manipulating buttons 215.

The second user input unit 130-2 can be configured in a manner that the keypad 200, the light guide film 300, and the printed circuit board 400 having the dome switches 415 and the electrodes 435 are stacked on or provided over one another.

As mentioned in the foregoing description, the keypad 200 may be provided with a plurality of the manipulating buttons 215 (keys). Each of the manipulating buttons 215 may depress a corresponding dome switch 415 located on the printed circuit board 400 to generate a control signal. The keypad 200 can include a top plate 210 and a bottom plate 250. The top plate may be formed of, for example, plastics, metal, or the like. The bottom plate 250 may be formed of, for example, a flexible material such as rubber, or the like. In this case, the top plate 210 and the bottom plate 250 may be attached to each other.

Between the top plate 210 and the bottom plate 250, a separate keypad film 230 can be provided in a manner that the numeral, character, symbol, or the like, is light-transmittively printed for each corresponding manipulating button 215. The keypad film 230, except the numeral, character, symbol, or the like, may be printed with a printing substance such that light provided underneath is transmitted only through the numeral, character, symbol or the like. In this case, the keypad film 230 can be formed of such material as polyurethane and the like.

However, the keypad 200 constructing the second user input unit 130-2 can adopt various kinds of configurations as well as the above-described configuration. For instance, instead of being separately provided with the keypad film 230, the numeral, character, symbol or the like can be directly inscribed on the corresponding manipulating button 215. Moreover, the keypad film 230 may be printed such that light shines through the entire button, except the numeral, character, symbol, or the like.

Meanwhile, the light guide film 300 can be provided under the keypad 200. In this case, the light guide film 300 may be provided with a sheet of a transparent material such as polycarbonate, polyurethane, or the like.

In case that the manipulating button 215 is pressed against the bottom plate 250 of the keypad 250, in order to depress the dome switch 415 of the printed circuit board 400, a button projection 255, as shown in FIG. 5, can be provided on the bottom plate 250. In this case, the button projection 255 can be projected toward the dome switch 415.

The printed circuit board 400 can include a dome switch array 410 having a clear film for fixing the dome switch 415, a reflective film for reflecting light which may leak out beneath the light guide film 300, or the like, and a substrate part 430 having an electrode 435 positioned to be brought into contact with the dome switch 415 when the dome switch 415 depressed.

Meanwhile, the substrate part 430 may be formed of a material such as polyimide having good heat-resistance, good insulation and excellent flexibility despite its relatively small thickness. The printed circuit board 400 can include a flexible printed circuit board having a prescribed amount of flexibility. The electrode 435 may be formed of a material that has good electric conductivity such as Cu. However, the substrate 430 and the electrode 435 are not limited to these materials and may also be formed of various types of materials according to a desired characteristics or application.

According to the present embodiment, total of 12 manipulating buttons 215 may be provided in a 3x4 array. A total of 12 dome switches 415 can be provided to correspond to each of the manipulating buttons 215, respectively. Moreover, a total of 12 electrode parts 435 can be provided on the printed circuit board 400 to correspond to the dome switches 415, respectively. It should be appreciated that the manipulating buttons of the mobile terminal as disclosed herein are not limited in number (e.g., '12') or to the formation (e.g., '3x4 formation'). Alternatively, the manipulating buttons 215 can be arranged according to the QWERTY formation or another appropriate configuration.

FIG. 5 is an exploded perspective view of the user input device of FIG. 4 that shows a bottom view. A button projection 255 may be formed on the bottom plate 250 at a lower part of the keypad 200. The button projections 255 may press against a corresponding dome switch 415 of the printed circuit board 400. In this case, the bottom plate 250 can be formed of smooth material such as rubber, or the like. A projected height of the button projection 255 may be set to a value sufficient to depress the dome switch without excessive force once the keypad 200, the light guide film 300, and the printed circuit board 400 have been assembled together. Referring to FIG. 4 and FIG. 5, the button projection 255 may be positioned to correspond to each of the dome switches 415 and the electrodes 435 of the printed circuit board 400 to generate a control signal in response to a selection of a corresponding button 215. Moreover, a light guide film 300 may be provided between the keypad 200 and the printed circuit board 400. At least one pattern part 320 (reflecting surface) may be formed on a backside of the light guide film 300. In particular, the at least one pattern part 320 may be formed in a region that corresponds to a respective manipulating button 215 of the keypad 200.

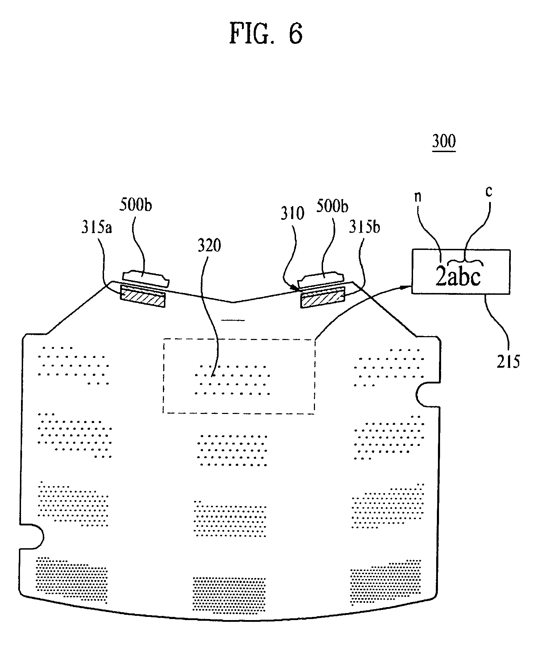

FIG. 6 illustrates a layout of a light guide film provided in the mobile terminal according to one embodiment. Light may be projected on the light guide film 300 laterally from a light source 500 at a side edge of the light guide film 300. As mentioned in the foregoing description, the light guide film 300 may be provided as a sheet formed of a transparent material. In this case, the transparent material can include one of polycarbonate, polyurethane, or the like. If an incident angle of the light from the light source 500 is greater than a prescribed angle, the light may be totally reflected within the light guide film 300 to be supplied underneath the manipulating button 215 of the keypad 200.

The light source 500, as shown in FIG. 6, may be positioned in the vicinity of the lateral side of the light guide film 300 and can include one of an LED (light emitting diode) device, or the like. In particular, at least two LEDs 500a and 500b can be provided as the light source 500 in the vicinity of the lateral side of the light guide film 300. The light source 500a, 500b may be positioned a prescribed distance from each other.

Thus, the lateral side surface of the light guide film 300, on which the light projected from the light source 500 is incident, can be referred to as a light incident part (light incident surface). Moreover, an incident surface 316 of a light collecting member 315 may be provided adjacent to the light incident area of the light guide film 300 according to the present embodiment to extend the area of the light incident surface that receives light provided from the light source 500. The resulting lateral surface including the lateral side surface of the light guide film 300 and the incident area 316 may be referred to as an extended light incident surface 310 (incident light intensity extending part) In this case, the light collecting member 315 may be provided on a top surface of the light guide film 300 and having a prescribed height such that the light incident surface may be extended.

Meanwhile, the light source 500 can be positioned the printed circuit board 400 having the dome switch 415 and the electrode 435. In this case, at least one light source 500 may be provided to supply illumination to the manipulating buttons 215.

However, if a size of the keypad 200 increased and the number of the manipulating buttons 215 is increased, it may become difficult to obtain a uniform illumination from a single light source 500. Although it may be possible to provide a larger light source 500 to obtain a sufficient illumination effect, this may increase the overall thickness of the mobile terminal 100. Hence, multiple light sources 500a, 500b having a suitable capacity may be provided and spaced apart from each other, such that the light provided by the light source 500 can be uniformly distributed below each of the manipulating buttons 215.

According to the embodiment as shown in FIG. 6, the LED devices 500a, 500b may be provided as the light source 500 and arranged to project light in different directions. If the light source 500 is provided on the same straight line or in parallel, it may cause a dead zone to which the light via the light guide film 300 may not be supplied. To minimize the dead zone, the LED devices can be positioned at an angle, e.g., to project light in a 'V' formation. Hence, if the positions of the LED devices 500a, 500b are adjusted in the above-mentioned manner, it may prevent the problem where a manipulating button 215 located at a left or right edge or a bottom side of the keypad 200 may look relatively darker.

Regarding the illumination supplied to the manipulating button 215 located at a central column among the manipulating buttons 215 of the keypad 200, since the light provided by the left and right light sources 500a and 500b are shared, the light intensity shortage that may occur due to the installed direction of the light source 500 may be prevented.

The light guide film 300 may illuminate the manipulating button 215 using the light reflected laterally in cross-sectional direction with respect to the manipulating buttons 215. Therefore, the laterally directed light underneath each of the manipulating buttons 215 should be redirected to illuminate the buttons 215.

In order for the light to be redirected toward the numeral, character, or symbol marked on the corresponding manipulating button 215 above, pattern parts 320 (reflecting surface) of various types can be formed on a surface of the light guide film 300. As the pattern part 320 is formed on a bottom surface of the light guide film 300, and more particularly, on a backside of the light guide film 300, the pattern part 320 is represented as a dotted line in FIG. 6.

The pattern part 320 (reflecting surface) can include a set of a plurality of patterns formed on the surface of the light guide film 300. The pattern part 320 can adopt a pattern of any type capable of supplying the light propagating within the light guide film 300 toward the keypad 200 by reflecting the propagating light with a specific refractive index. The pattern part 320 may include one or more protrusions formed on the surface of the light guide film 300. According to the embodiment as shown in FIG. 6, the protrusions of the pattern part 320 may be a plurality of dots printed on the surface of the light guide film 300.

The pattern part 320 should be positioned to correspond to the numeral, character or symbol marked on a corresponding manipulating button 215. Referring to FIG. 6, the pattern part 320 located within a box indication of the light guide film 300 may be formed at a position corresponding to the numeral '2' and the characters 'abc' marked on the corresponding manipulating button 215 of the keypad 200 to illuminate the corresponding numeral, characters, and/or the like. A type of the pattern part 320 can be variously modified according to a size or location of the numeral, character, or symbol.

The keypad 200 can be provided with a plurality of the manipulating buttons 215. In this case, the manipulating button 215 may be displayed to enable the light provided by the light source 500a or 500b to be transmitted via the numeral, character or symbol. In particular, the pattern part 320 can be provided at a portion corresponding to the numeral, character or symbol of the manipulating button 215.

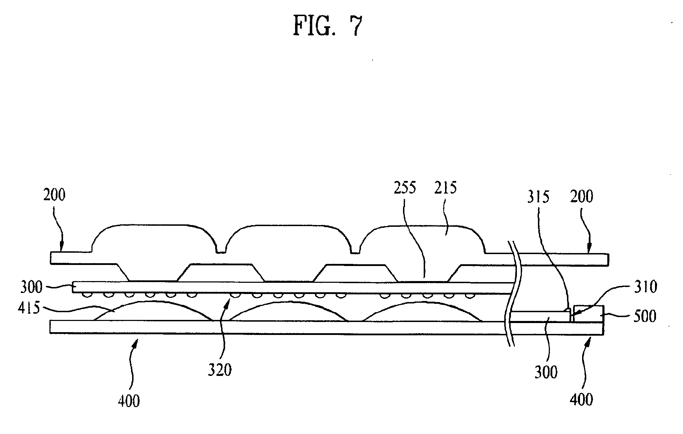

FIG. 7 is a cross-sectional view of a user input device of a mobile terminal according to one embodiment. A mobile terminal 100 according to the present embodiment may include a user input unit having a keypad 200, a printed circuit board 400 provided under the keypad 200 to convert a manipulation on the keypad 200 to an electric signal, at least one light source 500 configured to selectively provide illumination to the keypad 200, and a light guide film 300 provided between the keypad 200 and the printed circuit board 400. The light source 500 may direct light laterally at a side surface of the light guide film 300. The light guide film 300 may reflect the provided light toward the keypad 200. In this case, a height of one lateral side of the light guide 300, on which the light from the light source 500 is incident, can be greater than that of a random cross-section of the light guide film 300.

In particular, the keypad 200 may include a plurality of manipulating buttons 215. Button projections 255 can be provided on a bottom surface of the manipulating buttons 215. Moreover, the printed circuit board 400 can include a plurality of dome switches 415 configured to be depressed by corresponding button projections 255, and an electrode configured to be selectively brought into contact with the corresponding dome switch 415.

Therefore, if a user presses a specific manipulating button 215, the button projection 255 beneath the corresponding manipulating button 215 may press against the dome switch 415 corresponding to the specific manipulating button 215. Thus, the depressed dome switch 415 may be brought into contact with the electrode provided on the printed circuit board 400. This contact then enables an electric control signal corresponding to the specific manipulating button 215 to be generated from the printed circuit board 400.

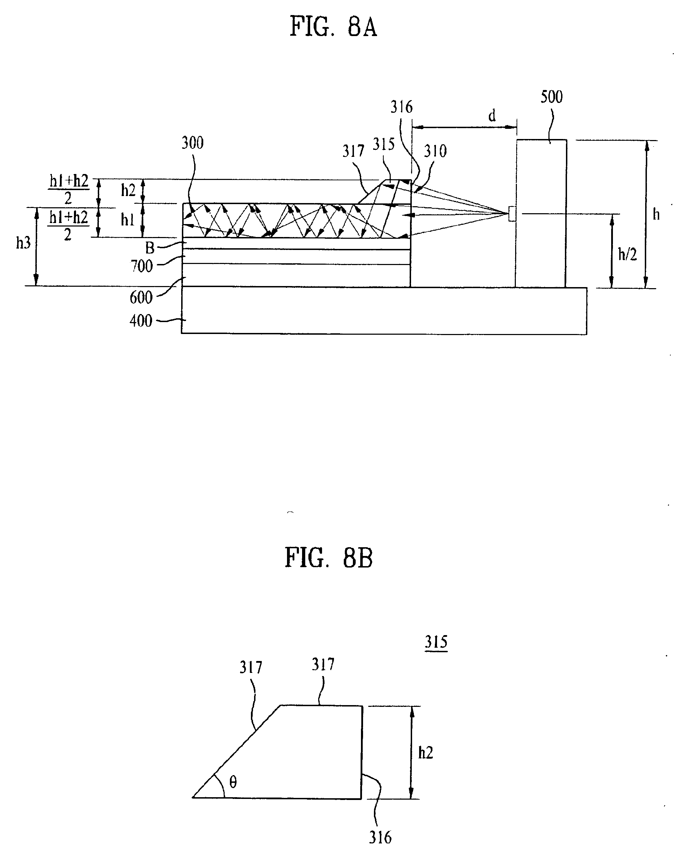

Meanwhile, an incident light intensity extending part 310 that increases a light incident area can be provided to extend a light incident source of the light guide film 300 on which the light provided by the light source is incident. The incident light intensity extending part 310 is explained in further detail with reference to FIG. 8 hereinbelow.

FIGs. 8A and 8B are enlarged cross-sectional views of one part of the second user input unit shown in FIG. 7. In particular, FIG. 8A is an enlarged cross-sectional view of the light source 500 and the light incident part of the light guide film 300, and FIG. 8B is an enlarged cross-sectional view of a light collecting member 315.

Referring to FIG. 8A, a light collecting member 315 configured to increase intensity of a light incident from a light source 500 can be provided adjacent to one lateral side of the light guide film 300, on which light emitted from the light source is incident, and more particularly, to a light incident area of the light guide film 300. The light collecting member 315 can include an incident surface 316 having a prescribed height to receive light directed from the light source 500 and a reflective surface 317 configured to reflect the light within the light collecting member 315 toward the light guide film 300.

Thus, since the mobile terminal 100 according to the present disclosure includes the light collecting member 315 having the incident surface 316 of the prescribed height provided adjacent to one lateral surface of the light guide film 300, it is able to considerably increase the amount of light incident on the light guide film 300.

In particular, the light source 500 may be positioned in a manner of being spaced apart from the light incident surface of the light guide film 300 by a predetermined gap. Moreover, the light projected from the light source 500 may spread radially, as shown in FIG. 8A. According to the present embodiment, as the light collecting member 315 is situated at the light incident surface of the light guide film 300, it brings an effect that the light incident surface of the light guide film 300 is extended or enlarged.

Moreover, in order to enable more light projected from the light source 500 to be incident on the light guide film 300, it is not necessary to increase an overall thickness of the light guide film 300. Therefore, a manipulating touch of the manipulating button 215 can be maintained. Moreover, increased thickness of the body of the mobile terminal 100 may be avoided.

The reflective surface 317 of the light collecting member 315, as shown in FIG. 8B, is configured to extend to a surface of the light guide film 300 from a boundary of the incident surface 316. Hence, the light incident on the incident surface 316 of the light collecting member 315 reflects from the reflective surface 317 and may then be guided toward the light guide film 300.

Thus, in order for the reflective surface 317 to reflect and guide the light incident from the incident surface 316 toward the light guide film 300, that an angle θ of an upper part of the reflective surface 317 with respect a top surface of the light guide film 300 is changed once at least. For example, the reflective panel 317 includes at least one corner (e.g., at the junction between the inclined surface and the top surface of the reflecting surface 317.

In particular, as the reflective surface 317 approaches the incident surface 316, the angle θ may be set, smaller. For example, the reflective surface 317 of the light collecting member 315 may be set to have a convex shape relative to the surface of the light guide film 300. As shown in FIG. 8B, the angle θ of the upper part of the reflective surface 317 with the surface of the light guide film 300 is changed once (e.g., between the inclined surface and the top surface of the reflecting plate 317).

If the angle θ is uniform without changing or the reflective surface 317 has a convex shape relative to the surface of the light guide film 300, the light incident from the light source 500 may deviate or lost from the light collecting member 315 or the light guide film 300 when the light reflects from the reflective surface 317.

Moreover, the light collecting member 315 can include a section in which the angle θ of the upper part of the reflective surface 317 (top surface) with the surface of the light guide film 300 is equal to or greater than 0 degree. The angle θ may be set to have a minimum value near the light incident surface, and more particularly, in the vicinity of the incident surface 316 of the light collecting member 315.

Referring to FIG. 8A, if the angle θ is near 0 degrees in the vicinity of the incident surface 316, the light incident on the incident surface 316 of the light collecting member 315 can be stably incident on the light collecting member 315. If the angle θ in the vicinity of the incident surface 316 is smaller than 0 degree (e.g., the top surface is inclined away from the light source 500), the height of the incident surface 316 must eventually be lowered.

Meanwhile, it is preferable that the angle θ of the reflecting surface 317 of the light collecting member 315 with respect to the light guide film 300 is an acute angle. If the angle θ is greater than 90 degrees, the light incident on the incident surface 316 of the light collecting member 315 arriving at the reflective surface 317 is unable to enter the light guide film 300 unless reflected downward. In particular, it is highly probable that the light incident into the light collecting member 315 is reflected back toward the light source 500 or away from the light guide film 300.

Meanwhile, referring again to FIG. 8A, a reflective film 600 and a clear film 700 may be stacked on the printed circuit board 400. Moreover, the light guide film 300 can be attached to a top surface of the clear film 700 via an adhesive material B.

In this case, the reflective film 600 may play a role in reflecting the light, which leaks underneath the light guide film 300 instead of reflecting toward the keypad 200 after being guided by the light guide film 300, toward the light guide film 300 or the keypad 200. Moreover, the clear film 700 may play a role in fixing the dome switch 415 thereto in a manner of being stacked on the dome switch 415. In particular, the clear film 700 may prevent the dome switch 415 from being separated from the light guide film 300 when moved in either an upward or downward direction.

The light source 500 can be provided on the printed circuit board 400. In this case, an overall height h of the light source 500 can be set to 0.4 mm. The light may be projected from the light source 500 at a height h/2 which may be set to 0.2 mm or approximately equal to one half of the height h of the light source 500. Moreover, a height of the reflective film 600 may be set to about 0.07 mm, a height of the clear film 700 may be set to about 0.04 mm, and a height B of the adhesive material may be set to about 0.01 mm.

According to the present embodiment, a thickness h1 of the light guide film 300 may be 0.125 mm and a height of the light collecting member 315 may be 0.1 mm, for example. A distanced between one light-incident lateral side of the light guide film 300 or the incident surface 316 of the light collecting member 315 and the light source 500 can be set to 0.3 mm, for example.

Under the above numerical value conditions, light projected from the light source 500 can be stably incident on the light guide film 300 or the light collecting member 315, whereby luminance of the keypad side can be enhanced. However, it should be appreciated that the thickness h1 of the light guide film 300 or the heights or distances of other components are not limited to the above mentioned numerical values and may be changed based on a desired light characteristic or other design considerations.

For instance, the light guide film 300 may have the thickness h1 set to a range between 0.1 ∼ 0.125 mm. In order for the light, which is projected from the light source 500, to be directed in the light guide film 300 as much as possible, a ratio of the height h2 of the light collecting member 315 to the thickness h1 of the light guide film 300 may be set to a range between 0.8 and 1.5. In particular, the height h2 of the incident surface 316 of the light collecting member 315 may be set based on a ratio between 0.8 and 1.5 with respect to the height h1 of the light guide film 300.

If the ratio of the height h2 of the incident surface 316 to the thickness h1 of the light guide film 300 is smaller than 0.8 (h2/h1 < 0.8), the effect of incident light intensity extension obtained from the light collecting member 315 may be considerably reduced. Meanwhile, if the ratio of the height h2 of the incident surface 316 to the thickness h1 of the light guide film 300 exceeds 1.5 (h2/h1 > 1.5), a space under the keypad 200 may need to be increased, which may require the overall size of the mobile terminal.

As mentioned in the foregoing description, the height h/2, at which the light is projected from the light source 500, may be set to an intermediate level of the height h of the light source 500. According to the present embodiment, the height h/2, at which light is projected from the light source 500, can be set to about 0.2 mm. Compared to the height h/2 associated with the light projecting height of the light source 500, if a height h3 of a middle point of the extended light incident surface 310 formed by the light collecting member 315 and the light guide film 300 lies within a specific range, the light projected from the light source 500 can be stably incident on the light collecting member 315 and the light guide film 300.

According to the present embodiment, if the height h1 of the light collecting member 315 is 0.1 mm and the thickness h2 of the light guide film 300 is 0.125 mm, a total thickness h1+h2 of the light incident surface formed by the light collecting member 315 and the light guide film 300 becomes 0.225 mm. Hence, with reference to the printed circuit board 400, the height h3 of the middle point of the light incident surface 310 formed by the light collecting member 315 and the light guide film 300 becomes about 0.233 mm. This height h3 may be slightly higher than h/2 or 0.2 mm (the light projected point of the light source 500). The ratio of the overall height h of the light source 500 to the height h3 of the middle point of the light incident surface 310 becomes about 1.72.

Thus, the height h/2 of the light projected point of the light source 500 is slightly smaller than the height h3 of the middle point of the light incident surface formed by the light collecting member 315 and the light guide film 300. In other words, the light may be emitted at a height (h/2) which is lower than a mid-point of the extended light incident surface 310 (h3). This is because, when the light is radially projected from the light source 500, an angle of light radiating upward with reference to a horizontal line may be slightly greater than an angle of light radiating downward. The may be due, in part, from light being reflected by the printed circuit board 400.

Therefore, with reference to the printed circuit board 400, the ratio of the height h of the light source 500 to the height h3 of the middle point of the light incident surface formed by the light collecting member 315 and the light guide film 300 is preferably set to a range between 1.6 and 1.9. In other words, the height of light emitted from the light source 500 (h/2) may be positioned below the mid-height of the extended light incident surface 310 (h3).

If the ratio is smaller than 1.6 or greater than 1.9, a difference between the height of the light incident surface h3 and the height h/2 of the light source 500 may be considerably increased. In this case, the light provided from the light source 500 can be partially lost, which may decrease the efficiency of the light guide film 300 and reduce illumination of the keypad 200.

Meanwhile, with reference to the printed circuit board 400, a ratio of the distance d between the light guide film 300 and the light source 500 to the height h of the light source 500 may be set to a range between 0.6 and 1.0. If the ratio of the distance d to the height h of the light source 500 exceeds 1.0, the light projected from the light source 500 can be partially lost instead of being incident on the extended surface 310. Moreover, if the ratio of the distance d to the height h of the light source 500 is less than 0.6, problem during manufacturing or assembly, or the like may result.

Meanwhile, since the light incident on the incident surface 316 of the light collecting member 315 should be reflected toward the light guide film 300, the light collecting member 315 may be formed of a material capable of reflecting the incident light internally. In particular, the light collecting member 315 can be formed by hardening a UV liquid using ultraviolet rays. More particularly, the UV liquid having prescribed viscosity may be placed in a mold having a shape of the light collecting member 315. The light guide film 300 may then be inserted in the mold, and UV rays may be applied to harden the UV liquid.

In this case, the UV liquid may be a type used in manufacturing optical cables and may include oligomer and monomer. The UV liquid may be formed by partially mixing an optical initiator to accelerate the hardening process. For instance, the UV liquid may include 60∼70 % by weight of oligomer and 23∼35 % by weight of monomer, and can be formed by mixing 5∼7 % by weight of optical initiator.

While UV rays are disclosed as being applied to the mold having the light guide film 300 inserted therein to harden the UV liquid, the present disclosure is not limited thereto. Alternatively, the UV liquid may be hardened on the light collecting member 315 prior to being attached to the light guide film 300. For instance, the light guide film 300 and the light collecting member 315 can be attached to each other using an adhesive agent or an adhesive tape. Moreover, in order to prevent interference with optical characteristics of the light collecting member 315, a light-transmittive adhesive agent or a light-transmittive adhesive tape may be used.

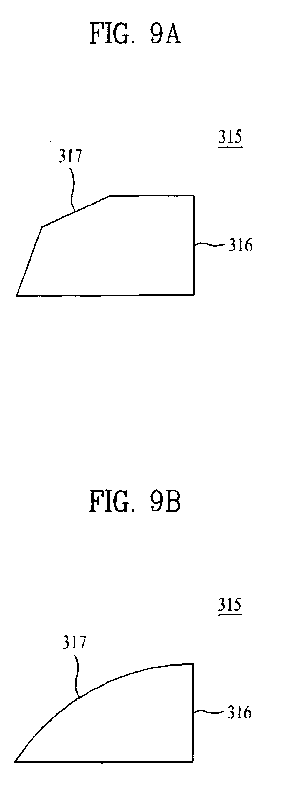

FIGs. 9A and 9B show various examples of a light collecting member according to the present disclosure. Referring to FIG. 9A, a bisected cross-section of the light collecting member 315 can be configured in a manner where an angle between a reflective surface 317 and the top surface of a light guide film 300 is changed twice. For example, the reflective surface 317 may include at least two corners that creates a change in its angle with respect to the light guide film 300. Referring to Fig. 9B, the reflective surface 317 can have an arc shape. However, in this case, an angle between the reflective surface 317 and an upper surface of the light guide film 300 may be formed to be greater than 0 degrees and less than 90 degrees. In other words, the reflective surface 317 is configured such that it does not extend beyond the leftmost edge of the light collecting member 315 or the topmost edge of the incident surface 316 of the light collecting member 315.

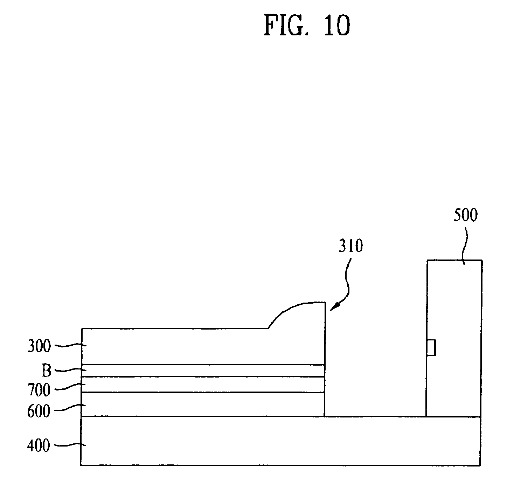

FIG. 10 is a cross-sectional diagram of a light guide film according to another embodiment of the present disclosure. A thickness of one lateral side surface of a light guide film 300, at which light is incident from the light source 500, can be formed to be thicker than that of another portion of the light guide film 300. In particular, an incident light intensity extending part 310 can be formed in a manner that a thickness or height of a light incident surface of the light guide film 300 is set to be greater than that of another part of the light guide film 300.

Although the light collecting member 315 is separately configured as a component the incident light intensity extending part 310 in the above described embodiment, the incident light intensity extending part 310 may also be formed to be integral on the light guide film 300. In particular, in one embodiment, the incident light intensity extending part 310 may be formed by increasing a thickness of the light guide film 300 at the light incident surface.

The above configured light guide film 300 can be fabricated in a manner of forming a mold to enable the thickness at the light incident surface to be greater than that of another portion of the light guide film 300, and then performing injection molding by inserting polycarbonate resin and the like into the mold. However, since the thickness of the light incident part needs to be maintained greater than that of another portion, a drawing process as a post processing can be omitted.

Thus, it is able to considerably increase the intensity of light incident from the light source 500 by changing the thickness of one side of the light guide film 300. Moreover, since an overall thickness of the light guide film 300 may be maintained, luminance provided to the keypad 200 can be remarkably enhanced without increasing the size of the mobile terminal body.

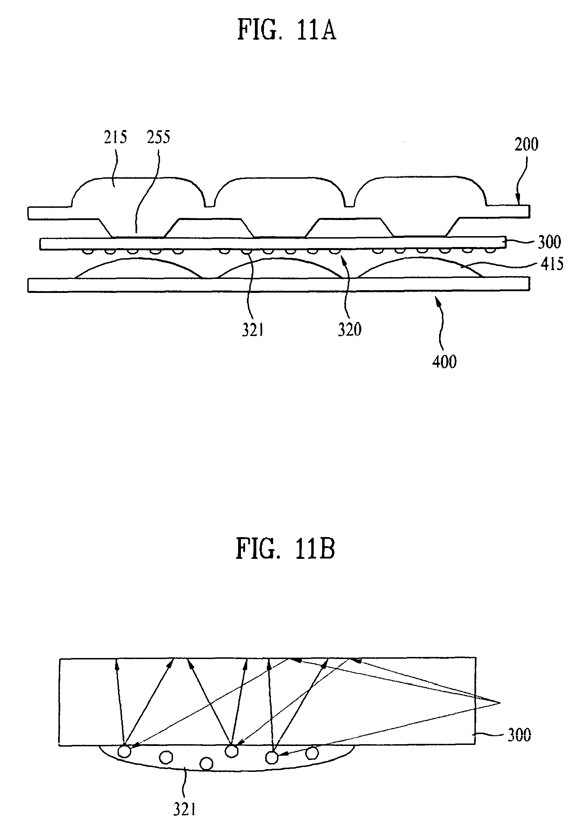

FIGs. 11A and 11B are enlarged cross-sectional views of the user input device of FIG. 7. In particular, FIG. 11A is a lateral cross-section view in which a keypad 200, a light guide film 300, and a printed circuit board 400 including a dome switch 415 are stacked. FIG. 11B is a cross-sectional view of the light guide film as shown in FIG. 11A.

Referring to FIG. 11A, at least one pattern part 320 including a set of a plurality of patterns can be provided to a light guide film 300. As mentioned in the foregoing description, the pattern part 320 can play a role in redirecting light propagating within the light guide film 300 toward the keypad 200. The pattern part 320 may be formed to have a plurality of types of patterns. In certain embodiments, the pattern part 320 can include a plurality of scratches formed on a bottom surface of the light guide film 300. Alternatively, the plurality of the patterns of the pattern part 320 can be formed in a manner in which a plurality of dots 321 are printed on the surface of the bottom surface of the light guide film 300.

When the patterns 320 are formed by printing the dots 321 on the surface of the light guide film 300 instead of forming the scratches, a process time required to form the pattern part 320 may be reduced. Generally, the scratches may be formed by engraving the surface of the light guide film 300. The engraving process may take about 2 minutes and may result in an overall increase time to manufacture the device.

However, the dot printing process according to the present embodiment may use a relatively simple process for printing ink on the surface of the light guide film 300, thereby shortening the process time. Moreover, the printing method may be advantageous in that this process may provide greater flexibility in changing a design of the patterns when compared to the scratching method.

Meanwhile, the plurality of the dots 321 may be printed using a light diffusive ink. Thus, if the plurality of the dots 321 are printed on a bottom surface of the light guide film 300, i.e., the backside of the light guide film 300, using the light diffusive ink, the light propagating within the light guide film 300 may be diffused and reflected by the dots 321. In particular, since the light diffusive ink may have a light diffusivity which is better than that of a normally used ink, uniformity of the light provided to the keypad 200 can be enhanced. The light diffusive ink can be formed by appropriately mixing TiO2 and SiO2 power with a transparent acrylic binder. Moreover, if pigments are added to the mixture, various colors may be added to the light.

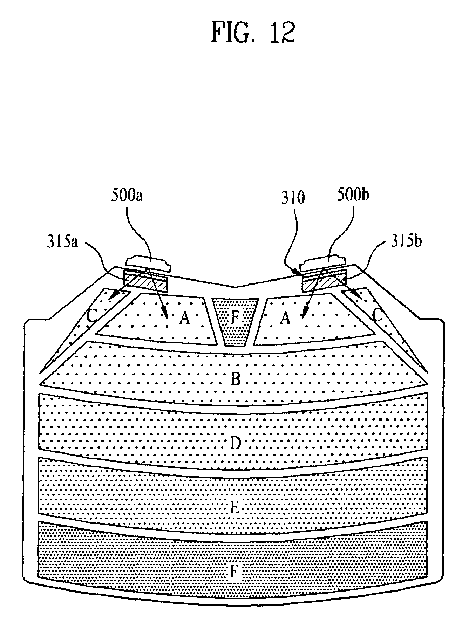

FIG. 12 illustrates a variation of density of patterns formed in the respective regions of a light guide film according to one embodiment of the present disclosure. the patterns 320 may be changed by changing the density of dots 321 provided therein. The number of dots 321 per unit area of the pattern part 320 can be increased when the pattern part 320 is positioned a greater distance from the light source 500. In particular, the density of the patterns of the pattern part 320 can be configured to be proportional to the distance from the light sources 500a and 500b.

In particular, when the pattern part 320 is located a relatively short distance from the light source 500a and 500b, since the light intensity provided by the light source 500a and 500b may be greater, the density of the patterns is set to be lower (e.g., pattern A). Alternatively, when the pattern part 320 is located relatively farther from the light source 500a and 500b, since the light intensity provided by the light source 500a and 500b may be lower, the density of the patterns can be set to be higher (e.g., pattern F).

FIG. 12 shows the density change of the patterns. In FIG. 12, a region A may have the lowest pattern density and a region F may have the highest pattern density. Moreover, the pattern density may be set to increase in order wherein Region A < region B < Region C < Region D < Region E < Region F.

Thus, because the intensity of light incident on the pattern part located closer to the light source 500a and 500b may be stronger, the density of the corresponding pattern part may be configured to be lower. Therefore, reflectivity of this pattern part may be lower. On the contrary, because the intensity of light incident on the pattern part located a greater distance from the light source 500a and 500b may be weaker, the density of the corresponding pattern part may be configured to be higher. Therefore, the reflectivity of this pattern part positioned farther away from the light source may be higher. Consequently, the illumination provided to a plurality of the manipulating buttons 215 overall may be balanced. In particular, the uniformity of the illumination provided to the manipulating buttons can be enhanced.

An object of the present application or patent is to provide a mobile terminal by which intensity of light provided to a keypad can be increased without increasing an overall thickness of a light guide film that shares illumination from a light source. Another object of the present disclosure is to provide a mobile terminal, by which a time and cost required to form a pattern on a surface of a light guide film can be reduced.

To achieve these objects and other advantages in accordance with the purpose of the disclosure, as embodied and broadly described herein, a mobile terminal may include a keypad having a user input unit, a printed circuit board provided under the keypad to convert a manipulation on the keypad to an electric signal, at least one light source configured to selectively provide illumination to the keypad, and a light guide film provided between the keypad and the printed circuit board to be provided with a light applied by the at least one light source laterally. The light guide film may be configured to reflect the provided light toward the keypad. In this case, a height of one lateral side, on which the light from the at least one light source is incident, in the light guide film may be formed to be greater than that of a random cross-section of the light guide film.

A light collecting member may be configured to increase the intensity of light incident from the light source and provided near one lateral side of the light guide film. Moreover, the light collecting member may include an incident plane (or surface) having a prescribed height, the light collecting member having the light incident thereon from the at least one light source, and a reflective plane configured to reflect the light incident into the light collecting member. In this case, the reflective plane may be configured to extend from a boundary of the incident plane to a surface of the light guide film.

An angle between an upper part of the reflective plane of the light collecting member and the surface of the light guide film may be changed at least once. Moreover, the light collecting member may include a section in which an angle between an upper part of the reflective plane with the surface of the light guide film is equal to or greater than 0 degrees.

Furthermore, a ratio of the height of the light collecting member to a thickness of the light guide film may be set to a value between 0.8 and 1.5. With reference to the printed circuit board, a ratio of a height of the light source to a middle height of a light incident plane formed by the light collecting member and the light guide film may be set to a value between 1.6 and 1.9. With reference to the printed circuit board, a ratio of a distance between the light guide film and the light source to a height of the light source may be set to a value between 0.6 and 1.0.

The light collecting member may be formed by hardening a UV liquid using ultraviolet rays. Moreover, a thickness of the one lateral side of the light guide film may be formed greater than that of the rest of the light guide film.

At least one pattern part including a set of a plurality of patterns may be formed on the light guide film. Moreover, a plurality of the patterns configuring the pattern part may be formed by printing a plurality of dots on a surface of the light guide film. In this case, the plurality of the dots may be printed using a light diffusive ink. The number of the patterns per unit area of the pattern part may be incremented as the pattern part is positioned farther from the light source.

In another aspect of the present disclosure, a mobile terminal may include at least one light source, a keypad having a plurality of manipulating buttons and a plurality of button projections respectively provided at bottoms of the manipulating buttons, a light guide film configured to internally guide a light incident on its lateral side from the light source, and a printed circuit board having a plurality of dome switches. The dome switches may be configured to be pressurized by respective button projections of the keypad and an electrode part may be configured to be selectively brought into contact with the corresponding dome switch. In this case, an incident light intensity extending part configured to extend a light incident area may be provided at a light incident part of the light guide film on which the light provided by the light source is incident.

The incident light intensity extending part may include a light collecting member provided to a top surface of the light guide film to have a prescribed height and the light incident on the lateral side of the light collecting member may be reflected toward the light guide film. An angle of an upper part of the light collecting member with the light guide film may be an acute angle. Moreover, an angle of an upper part of the light collecting member with the light guide film may be minimized on a side of the light incident part. Furthermore, the incident light intensity extending part may be formed by increasing a thickness of the light incident part of the light guide film to be greater than that of the rest of the light guide film.

In one embodiment, as broadly disclosed herein, an input device for a mobile terminal may include a keypad having a plurality of buttons; a printed circuit board provided below the keypad to convert an input on the keypad to an electric signal; at least one light source configured to illuminate the keypad; and a light guide film provided between the keypad and the printed circuit board. The at least one light source is positioned to emit light toward a light receiving surface positioned at a lateral surface of the light guide film, and a height of the light receiving surface is greater than a thickness of the light guide film.

The input device may further include a light collector positioned on the light guide film, the light collector having a first surface positioned adjacent to the lateral surface of the light guide film, wherein the first surface and the lateral surface forms the light receiving surface. The light collector may include a second surface configured to reflect the light received in the light collector toward the light guide film, wherein the second surface is positioned adjacent to the first surface and extends to a surface of the light guide film.

A first portion of the second surface is positioned at a first angle relative to the surface of the light guide film, and a second portion of the reflecting surface is positioned at a second angle relative to the surface of the light guide film, the first angle being different than the second angle. The second surface of the light collector is positioned at a prescribed angle relative to the surface of the light guide film, wherein the prescribed angle is greater than or equal to 0 degrees.

A first ratio of a height of the first surface of the light collector to the thickness of the light guide film may be between 0.8 and 1.5. A second ratio of a height of the at least one light source to a height from a mid-point of the light receiving surface to the printed circuit board may be between 1.6 and 1.9. A third ratio of a distance between the light guide film and the light source to a height of the at least one light source may be between 0.6 and 1.0.

The light collector may be formed of a UV liquid and hardened on the light guide film by UV light. Moreover, the thickness of the light guide film at the lateral surface of the light guide film may be formed to be greater than of the thickness of the light guide film at other areas. The light guide film may include at least one reflecting surface formed on a second surface of the light guide film, the at least one reflecting surface configured to redirect light propagating in the light guide film toward the buttons on the keypad. The at least one reflecting surface of the light guide film may include a prescribed number of protrusions configured to redirect the propagating light.

The plurality of protrusions may be formed by light diffusive ink printed on the second surface of the light guide film. Moreover, the prescribed number of protrusions formed in the at least one reflecting surface is determined based on a distance of the reflecting surface from the at least one light source.

In one embodiment, as broadly disclosed herein, an input device for a mobile terminal may include at least one light source; a keypad having a plurality of buttons, wherein each of the plurality of buttons include a projection formed on a bottom surface of the buttons; a light guide film configured to internally guide light received at a lateral side surface from the light source; and a printed circuit board having a plurality of dome switches and a plurality of corresponding electrodes. Here, each of the plurality of dome switches may be configured to contact a corresponding electrode in response to a selection of a corresponding button on the keypad. Moreover, an extension may be provided at the lateral side surface of the light guide film where light is received from the at least one light source, the extension configured to increase a light incident area of the light guide film.

The extension may include a light collector provided on a top surface of the light guide film and formed to have a prescribed height, the light collector being configured to reflect received light toward the light guide film. An angle between the second surface of the light collector and the light guide film may be an acute angle, and an angle between the second surface of the light collecting member and the light guide film may be minimized at an area adjacent to the extension. Moreover, the extension may be formed by increasing a thickness of the light guide film at the lateral side surface to be greater than that of the rest of the light guide film.

In one embodiment, as broadly disclosed herein, a user input device for a mobile terminal may include a keypad having a plurality of buttons configured to be illuminated; a light guide positioned under the keypad and configured to guide light to the plurality of buttons; a substrate positioned under the light guide; and at least one LED provided on the substrate and configured to emit light laterally towards a side surface of the light guide. At least one first protrusion may be positioned on the light guide at the side surface to correspond to a position of the at least one LED, the first protrusion forming a light receiving surface with the side surface of the light guide such that a height of the light receiving surface is greater than a thickness of the light guide. Moreover, a plurality of second protrusions may be positioned on the light guide to correspond to a position of the plurality of buttons, the plurality of second protrusions configured to reflect light propagating in the light guide toward a corresponding button.

Accordingly, the present application or patent provides the following effects and/or advantages. First, in a mobile terminal according to the present disclosure, a height of a lateral side of a light guide film, on which light is incident from a light guide film, may be formed to be greater than that of another location on the light guide film. Hence, the light incident on the light guide film of the present disclosure may have a light intensity which is higher than that for another light guide film of the same thickness. Therefore, an overall thickness of a terminal body is not increased while increasing the illumination of the keypad. Secondly, in a mobile terminal according to the present disclosure, time and cost required to form patterns on a surface of a light guide film can be considerably reduced.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An input device for a mobile terminal (100) comprising:
a keypad (200) having a plurality of buttons (215);
a printed circuit board (400) provided below the keypad and comprising a plurality of electrodes (435) adapted to generate a control signal in response to a selection of a corresponding button on the keypad;
at least one light source (500) configured to illuminate the keypad; and
a light guide film (300) provided between the keypad and the printed circuit board,
wherein the at least one light source (500) is positioned to emit light toward a light receiving surface (310) positioned at a lateral surface of the light guide film (300),
wherein a height of the light receiving surface (310) is greater than a thickness of the light guide film, and
wherein the light guide film (300) includes at least one reflecting surface (320) configured to redirect light propagating in the light guide film toward the buttons (215) on the keypad (200),
**characterized in that** the at least one reflecting surface (320) of the light guide film includes a prescribed number of protrusions (321) configured to redirect the propagating light, the prescribed number of protrusions being proportional to a distance of the reflecting surface from the at least one light source.

2. The input device of claim 1, further comprising a light collector (315) positioned on the light guide film (300), the light collector having a first surface (316) positioned adjacent to the lateral surface of the light guide film, wherein the first surface and the lateral surface are arranged to form the light receiving surface (310).

3. The input device of claim 2, the light collector (315) includes a second surface (317) configured to reflect the light received in the light collector toward the light guide film (300).

4. The input device of claim 3, wherein the second surface (317) is positioned adjacent to the first surface (316) and is configured to extend to a surface of the light guide film.

5. The input device of claim 4, wherein a first portion of the second surface (317) is positioned at a first angle relative to the surface of the light guide film (300), and a second portion of the second surface (317) is positioned at a second angle relative to the surface of the light guide film (300), the first angle being different than the second angle.

6. The input device of claim 4, wherein the second surface (317) of the light collector (315) is positioned at a prescribed angle relative to the surface of the light guide film (300), wherein the prescribed angle is greater than or equal to 0 degrees.

7. The input device of any one of claims 3 to 6, wherein a first ratio of a height (h2) of the first surface (316) of the light collector (315) to the thickness (h1) of the light guide film (300) is between 0.8 and 1.5.

8. The input device of claim 7, wherein a second ratio of a height (h) of the at least one light source (500) to a height from a mid-point of the light receiving surface (310) to the printed circuit board (400) is between 1.6 and 1.9.

9. The input device of claim 7, wherein a third ratio of a distance between the light guide film (300) and the light source (500) to a height (h) of the at least one light source (500) is between 0.6 and 1.0.

10. The input device of any one of claims 2 to 9, wherein the light collector (315) is formed of a UV liquid and hardened on the light guide film by UV light.

11. The input device of any one of claims 1 to 10, wherein the thickness of the light guide film (300) at the lateral surface of the light guide film is formed to be greater than of the thickness of the light guide film at other areas.

12. The input device of claim 1, wherein the plurality of protrusions is formed by light diffusive ink printed on the second surface of the light guide film.

## Patentansprüche

1. Eingabevorrichtung für ein mobiles Endgerät (100), die aufweist:
ein Tastenfeld (200) mit einer Vielzahl von Tasten (215);
eine Leiterplatte (400), die unter dem Tastenfeld vorgesehen ist und eine Vielzahl von Elektroden (435) aufweist, die so angepasst sind, dass sie als Reaktion auf die Wahl einer entsprechenden Taste auf dem Tastenfeld ein Steuersignal erzeugen;
mindestens eine Lichtquelle (500), die für die Beleuchtung des Tastenfelds konfiguriert ist; und
einen zwischen dem Tastenfeld und der Leiterplatte vorgesehenen Lichtleitfilm (300),
wobei die mindestens eine Lichtquelle (500) so angeordnet ist, dass sie Licht zu einer Lichtempfangsfläche (310) emittiert, die an einer Seitenfläche des Lichtleitfilms (300) angeordnet ist,
wobei eine Höhe der Lichtempfangsfläche (310) größer als eine Dicke des Lichtleitfilms ist, und
wobei der Lichtleitfilm (300) mindestens eine reflektierende Oberfläche (320) einschließt, die so konfiguriert ist, dass sie Licht, das sich in dem Lichtleitfilm ausbreitet, zu den Tasten (215) auf dem Tastenfeld (200) umlenkt,
**dadurch gekennzeichnet, dass** die mindestens eine reflektierende Oberfläche (320) des Lichtleitfilms eine vorgeschriebene Anzahl von Vorsprüngen (321) aufweist, die so konfiguriert sind, dass sie das sich ausbreitende Licht umlenken, wobei die vorgeschriebene Anzahl von Vorsprüngen proportional zu einem Abstand der reflektierenden Oberfläche von der mindestens einen Lichtquelle ist.

2. Eingabevorrichtung nach Anspruch 1, die ferner einen auf dem Lichtleitfilm (300) positionierten Lichtkollektor (315) aufweist, wobei der Lichtkollektor eine erste Oberfläche (316) aufweist, die angrenzend an die Seitenfläche des Lichtleitfilms angeordnet ist, wobei die erste Oberfläche und die Seitenfläche so angeordnet sind, dass sie die Lichtempfangsfläche (310) bilden.

3. Eingabevorrichtung nach Anspruch 2, wobei der Lichtkollektor (315) eine zweite Oberfläche (317) einschließt, die so konfiguriert ist, dass sie das im Lichtkollektor empfangene Licht zu dem Lichtleitfilm (300) reflektiert.

4. Eingabevorrichtung nach Anspruch 3, wobei die zweite Oberfläche (317) angrenzend an die erste Oberfläche (316) positioniert und so konfiguriert ist, dass sie bis zu einer Oberfläche des Lichtleitfilms reicht.

5. Eingabevorrichtung nach Anspruch 4, wobei ein erster Abschnitt der zweiten Oberfläche (317) in einem ersten Winkel zu der Oberfläche des Lichtleitfilms (300) angeordnet ist und ein zweiter Abschnitt der zweiten Oberfläche (317) in einem zweiten Winkel zur Oberfläche des Lichtleitfilms (300) angeordnet ist, wobei sich der erste Winkel von dem zweiten Winkel unterscheidet.

6. Eingabevorrichtung nach Anspruch 4, wobei die zweite Oberfläche (317) des Lichtkollektors (315) in einem vorgeschriebenen Winkel zur Oberfläche des Lichtleitfilms (300) angeordnet ist, wobei der vorgeschriebene Winkel größer oder gleich 0 Grad ist.

7. Eingabevorrichtung nach einem der Ansprüche 3 bis 6, wobei ein erstes Verhältnis einer Höhe (h2) der ersten Oberfläche (316) des Lichtkollektors (315) zur Dicke (h1) des Lichtleitfilms (300) zwischen 0,8 und 1,5 liegt.

8. Eingabevorrichtung nach Anspruch 7, wobei ein zweites Verhältnis einer Höhe (h) der mindestens einen Lichtquelle (500) zu einer Höhe von einem Mittelpunkt der Lichtempfangsfläche (310) zu der Leiterplatte (400) zwischen 1, 6 und 1, 9 liegt.

9. Eingabevorrichtung nach Anspruch 7, wobei ein drittes Verhältnis eines Abstands zwischen dem Lichtleitfilm (300) und der Lichtquelle (500) zu einer Höhe (h) der mindestens einen Lichtquelle (500) zwischen 0,6 und 1,0 liegt.

10. Eingabevorrichtung nach einem der Ansprüche 2 bis 9, wobei der Lichtkollektor (315) aus einer UV-härtbaren Flüssigkeit geformt und durch UV-Licht auf dem Lichtleitfilm (300) gehärtet wird.

11. Eingabevorrichtung nach einem der Ansprüche 1 bis 10, wobei die Dicke des Lichtleitfilms (300) an der Seitenfläche des Lichtleitfilms größer ausgebildet wird als die Dicke des Lichtleitfilms in anderen Bereichen.

12. Eingabevorrichtung nach Anspruch 1, wobei die Vielzahl von Vorsprüngen durch lichtstreuende Tinte geformt wird, die auf die zweite Oberfläche des Lichtleitfilms aufgedruckt wird.

## Revendications

1. Dispositif d'entrée pour un terminal mobile (100) comprenant :
un clavier (200) comportant une pluralité de boutons (215) ;
une carte de circuits imprimés (400) disposée en dessous du clavier et comprenant une pluralité d'électrodes (435) aptes à générer un signal de commande en réponse à une sélection d'un bouton correspondant sur le clavier ;
au moins une source lumineuse (500) configurée pour éclairer le clavier ; et
un film de guide de lumière (300) disposé entre le clavier et la carte de circuits imprimés,
dans lequel l'au moins une source lumineuse (500) est positionnée pour émettre de la lumière vers une surface de réception de lumière (310) positionnée à une surface latérale du film de guide de lumière (300),
dans lequel une hauteur de la surface de réception de lumière (310) est supérieure à une épaisseur du film de guide de lumière, et
dans lequel le film de guide de lumière (300) comprend au moins une surface réfléchissante (320) configurée pour rediriger la lumière se propageant dans le film de guide de lumière vers les boutons (215) sur le clavier (200),
**caractérisé en ce que** l'au moins une surface réfléchissante (320) du film de guide de lumière comprend un nombre prescrit de saillies (321) configurées pour rediriger la lumière se propageant, le nombre prescrit de saillies étant proportionnel à une distance de l'au moins une source lumineuse à la surface réfléchissante.

2. Dispositif d'entrée selon la revendication 1, comprenant en outre un collecteur de lumière (315) positionné sur le film de guide de lumière (300), le collecteur de lumière ayant une première surface (316) positionnée adjacente à la surface latérale du film de guide de lumière, dans lequel la première surface et la surface latérale sont agencées pour former la surface de réception de lumière (310).

3. Dispositif d'entrée selon la revendication 2, le collecteur de lumière (315) comprenant une deuxième surface (317) configurée pour réfléchir la lumière reçue dans le collecteur de lumière vers le film de guide de lumière (300).

4. Dispositif d'entrée selon la revendication 3, dans lequel la deuxième surface (317) est positionnée adjacente à la première surface (316) et est configurée pour s'étendre jusqu'à une surface du film de guide de lumière.

5. Dispositif d'entrée selon la revendication 4, dans lequel une première partie de la deuxième surface (317) est positionnée à un premier angle par rapport à la surface du film de guide de lumière (300), et une deuxième partie de la deuxième surface (317) est positionnée à un deuxième angle par rapport à la surface du film de guide de lumière (300), le premier angle étant différent du deuxième angle.

6. Dispositif d'entrée selon la revendication 4, dans lequel la deuxième surface (317) du collecteur de lumière (315) est positionnée à un angle prescrit par rapport à la surface du film de guide de lumière (300), dans lequel l'angle prescrit est supérieur ou égal à 0 degré.

7. Dispositif d'entrée selon l'une quelconque des revendications 3 à 6, dans lequel un premier rapport d'une hauteur (h2) de la première surface (316) du collecteur de lumière (315) sur l'épaisseur (h1) du film de guide de lumière (300) est entre 0,8 et 1,5.

8. Dispositif d'entrée selon la revendication 7, dans lequel un deuxième rapport d'une hauteur (h) de l'au moins une source lumineuse (500) sur une hauteur d'un point de milieu de la surface de réception de lumière (310) à la carte de circuits imprimés (400) est entre 1,6 et 1,9.

9. Dispositif d'entrée selon la revendication 7, dans lequel un troisième rapport d'une distance entre le film de guide de lumière (300) et la source lumineuse (500) sur une hauteur (h) de l'au moins une source lumineuse (500) est entre 0,6 et 1,0.

10. Dispositif d'entrée selon l'une quelconque des revendications 2 à 9, dans lequel le collecteur de lumière (315) est constitué d'un liquide UV et durci sur le film de guide de lumière par une lumière UV.

11. Dispositif d'entrée selon l'une quelconque des revendications 1 à 10, dans lequel l'épaisseur du film de guide de lumière (300) à la surface latérale du film de guide de lumière est formée pour être supérieure à l'épaisseur du film de guide de lumière aux autres endroits.

12. Dispositif d'entrée selon la revendication 1, dans lequel la pluralité de saillies est formée par de l'encre de diffusion de lumière imprimée sur la deuxième surface du film de guide de lumière.
